# EUROPÄISCHE PATENTSCHRIFT

(11) **EP 1 613 514 B1**
(45) Veröffentlichungstag und Bekanntmachung des Hinweises auf die Patenterteilung: **22.11.2006**
(21) Anmeldenummer: 04718625.9
(22) Anmeldetag: 09.03.2004
(51) Int. Cl.: B60R 21/34, B62D 25/12

(54) **SICHERHEITSVORRICHTUNG**
SAFETY DEVICE
DISPOSITIF DE SECURITE

(30) Priorität: 11.04.2003 DE 10316595
(43) Veröffentlichungstag der Anmeldung: 11.01.2006
(73) Patentinhaber: DaimlerChrysler AG, 70567 Stuttgart (DE)
(72) Erfinder: VISEL, Kai, 70569 Stuttgart (DE)
(86) Internationale Anmeldenummer: PCT/EP2004/002387
(87) Internationale Veröffentlichungsnummer: WO 2004/089702

(56) Entgegenhaltungen:
- DE-A- 10 039 107
- DE-A- 10 132 950
- DE-A- 19 957 872

## Beschreibung

Die Erfindung betrifft eine Sicherheitsvorrichtung für ein Kraftfahrzeug nach dem Oberbegriff des Patentanspruchs 1.

Eine derartige Sicherheitsvorrichtung ist beispielsweise aus der DE 199 57 872 A bekannt. In der DE 100 14 832 A1 ist eine Fronthaube beschrieben, die in einer Unfallsituation aus ihrer geschlossenen Ausgangsposition in eine angehobene Sicherheitsposition verlagert wird. Die bekannte Sicherheitsvorrichtung umfaßt einen Airbag, der unterhalb dieser Fronthaube angeordnet ist. In der Sicherheitsposition der Fronthaube wird der Airbag befüllt. Der befüllte Airbag überdeckt einen in der Sicherheitsposition der Fronthaube auftretenden Spalt zwischen Karosserie und Fronthaube im seitlichen Bereich der Fronthaube.

Der vorliegenden Erfindung liegt die Aufgabe zugrunde, eine Sicherheitsvorrichtung für ein Kraftfahrzeug zu schaffen, welche den Fußgängerschutz erhöht.

Diese Aufgabe wird durch eine Sicherheitsvorrichtung mit den Merkmalen des Patentanspruchs 1 gelöst.

Demnach zeichnet sich die erfindungsgemäße Sicherheitsvorrichtung durch ein Abdeckelement aus, welches einer aktiven Fronthaube zugeordnet ist und einen Bereich zwischen Fronthaube und Karosserie verdeckt, sobald die Fronthaube in eine angehobene Sicherheitsposition verlagert wird. Das Abdeckelement ist in der Sicherheitsposition winklig zur Fronthaube angeordnet, so daß zwischen Karosserie und Fronthaube, solange sich die Fronthaube in der Sicherheitsposition befindet, kein Spalt auftritt. Dadurch wird verhindert, daß sich ein Fußgänger bei einem Unfall zwischen Fronthaube und Karosserie beispielsweise eine Hand einklemmt.

Aus Kostengesichtspunkten ist es günstig, die Sicherheitsvorrichtung mit der Fronthaube einstückig auszubilden, weil in diesem Fall kein Montageaufwand zur Befestigung der Sicherheitseinrichtung an der Fronthaube notwendig ist. Selbstverständlich ist auch eine mehrteilige Ausführung denkbar, wie in den folgenden Ausführungsbeispielen näher erläutert. Eine mehrteilige Ausführung hat den Vorteil, daß die Sicherheitsvorrichtung aus einem anderen Material als die Fronthaube hergestellt werden kann, wie beispielsweise Kunststoff oder ein spezielles Metall.

Gemäß der Erfindung ist das Abdeckelement schwenkbar gelagert. Durch diese Lagerung kann das Abdeckelement in der Sicherheitsposition anders angeordnet sein als in der Ausgangsposition der Fronthaube. Dies hat den Vorteil, daß das Abdeckelement in der Ausgangsposition der Fronthaube so verschwenkt werden kann, daß für die Ausgangsposition der Fronthaube kein zusätzlicher Bauraum für das Abdeckelement geschaffen werden muß.

Vorteilhafte Ausgestaltungen sind den Unteransprüchen zu entnehmen.

Das Abdeckelement ist gemäß einer weiteren Ausführungsform an der Fronthaube befestigt. Es ist jedoch auch denkbar, das Abdeckelement an der Karosserie zu befestigen. Diese Art der Anordnung hat den Vorteil, daß die Fronthaube in bezug auf den Fußgängerschutz unabhängig von der erfindungsgemäßen Sicherheitsvorrichtung frei gestaltet werden kann. Eventuell durch die Befestigung der Sicherheitsvorrichtung anfallende Kompensationsmaßnahmen, beispielsweise in bezug auf die Steifigkeit der Fronthaube, sind nicht notwendig.

Gemäß einer weiteren Ausführungsform umfaßt die Sicherheitsvorrichtung ein Abdeckelement und ein Halteelement. Das Halteelement dient der Aufnahme von Befestigungselementen, wie beispielsweise Schrauben. Durch dieses Halteelement werden zusätzliche Befestigungsvorrichtungen an der Fronthaube oder an der Karosserie eingespart. Die Sicherheitsvorrichtung kann vormontiert werden und mittels des Halteelements an der Fronthaube oder Karosserie befestigt werden.

Gemäß einer weiteren Ausführungsform ist das Abdeckelement mit dem Halteelement über ein Scharnier verbunden. In der Sicherheitsposition der Fronthaube erstreckt sich das Abdeckelement im wesentlichen senkrecht zur Fronthaube und in der Ausgangsposition der Fronthaube erstreckt sich das Abdeckelement im wesentlichen parallel zur Fronthaube. Durch das Scharnier läßt sich die Positionsveränderung des Abdeckelements auf einfache Weise verwirklichen und man spart zudem Bauraum, wenn das Abdeckelement in der Ausgangsposition der Fronthaube eingeklappt ist.

In der Ausgangsposition der Fronthaube ist das Abdeckelement gemäß einer weiteren Ausführungsform parallel zur Fronthaube unter Vorspannung arretiert. Die Arretierung kann beispielsweise über einen Bolzen oder einen Riegel erfolgen. Die Vorspannung kann aus einer Feder resultieren. In einer Unfallsituation wird die vorgespannte Feder entspannt und das Abdeckelement nimmt automatisch die zur Fronthaube senkrechte Position ein.

Die Lageänderung des Abdeckelements wird gemäß einer weiteren Ausführungsform über einen Sensor ausgelöst. So kann beispielsweise der Sensor, welcher die Fronthaube von der Ausgangsposition in die Sicherheitsposition überführt gleichzeitig das Auslösesignal für die Lageänderung des Abdeckelements geben. Dadurch wird kein zusätzlicher Sensor für die Sicherheitsvorrichtung benötigt.

Die Sicherheitsvorrichtung weist gemäß einer weiteren Ausführungsform mehrere nebeneinander angeordnete Segmente auf. Die Segmente sind voneinander beabstandet und können jeweils ein Abdeckelement und ein Halteelement umfassen. Die einzelnen Segmente können über Stege oder Draht miteinander verbunden sein. Dadurch wird die Sicherheitsvorrichtung flexibler und paßt sich dem Verlauf der Fronthaube, der beispielsweise entlang der Scheinwerfer geschwungen sein kann, an. Die Sicherheitsvorrichtung kann daher für Fronthauben verschiedenster Fahrzeugtypen verwendet werden.

Im folgenden wird die erfindungsgemäße Sicherheitsvorrichtung anhand der in der Zeichnung dargestellten Ausführungsbeispiele näher erläutert. Es zeigen:
- Fig. 1a,b: eine Schnittansicht entlang einer Längsachse eines Kraftfahrzeugs durch Fronthaube und Karosserie auf Höhe eines Scheinwerfermoduls mit einer aus dem Stand der Technik bekannten Sicherheitsvorrichtung, welche einstückig mit der Fronthaube ausgeführt ist;
- Fig. 2a,b: eine Schnittansicht gemäß Fig. 1 mit einer erfindungsgemäßen Sicherheitsvorrichtung, die über ein Scharnier an der Fronthaube befestigt ist;
- Fig. 3a,b: eine Schnittansicht gemäß Fig. 1 mit einer erfindungsgemäßen Sicherheitsvorrichtung, welche über ein Scharnier an der Karosserie befestigt ist sowie
- Fig. 4a,b: eine dreidimensionale Ansicht einer erfindungsgemäßen Sicherheitsvorrichtung, die aus mehreren Segmenten besteht.

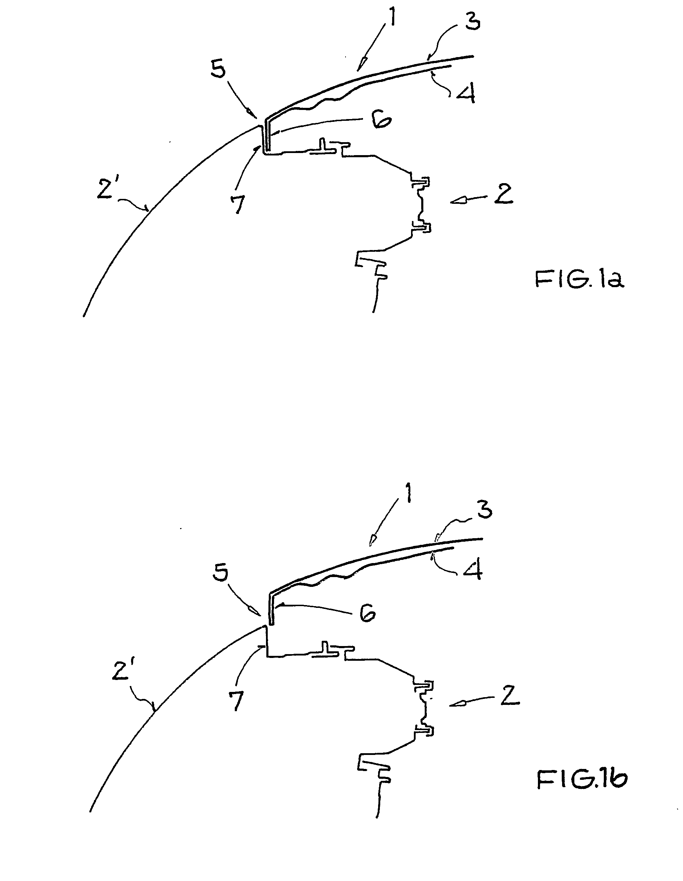

In Fig. 1a ist eine Schnittansicht durch einen Frontbereich eines Kraftfahrzeugs mit einer Fronthaube 1 und einem Scheinwerfermodul 2 dargestellt. Die Fronthaube 1 ist in einem geschlossenen Zustand dargestellt. Dieser Zustand wird im folgenden als Ausgangsposition bezeichnet. Die Fronthaube 1 weist ein Oberblech 3 und ein Unterblech 4 auf. Die beiden Bleche 3, 4 sind im wesentlichen parallel zueinander angeordnet. An einem in Fahrtrichtung nach vorne weisenden bzw. dem Scheinwerfermodul 2 zugewandten Ende der Fronthaube 1 ist eine Sicherheitsvorrichtung 5 angeordnet. Die Sicherheitsvorrichtung 5 umfaßt ein im wesentlichen senkrecht zur Fronthaube 1 angeordnetes Abdeckelement 6. Das Abdeckelement 6 ist aus dem Oberblech 3 und dem Unterblech 4 der Fronthaube 1 gebildet. Es ist aber auch denkbar, das Abdeckelement 6 nur aus einem der beiden Bleche 3, 4 zu bilden. Eine Streuscheibe 2' des Scheinwerfermoduls 2 umfaßt an einer der Fronthaube 1 zugewandten Seite einen Absatz 7, der das Abdeckelement 6 der Sicherheitsvorrichtung 5 bei Ansicht des Kraftfahrzeugs entgegen der Fahrtrichtung teilweise verdeckt.

Fig. 1b unterscheidet sich von Fig. 1a dadurch, daß die Fronthaube 1 gegenüber der Karosserie um ein bestimmtes Maß angehoben ist. Dieser Zustand wird im folgenden als Sicherheitsposition bezeichnet. Das Maß der Anhebung entspricht den gesetzlichen Anforderungen. Das Abdeckelement 6 weist eine Länge auf, die dem Abstand der Fronthaube 1 zur Karosserie an ihrem in Fahrtrichtung weisenden Ende in der Sicherheitsposition entspricht. In der Sicherheitsposition der Fronthaube 1 endet das Abdeckelement 6 an dem Absatz 7 der Streuscheibe 2' und verhindert somit die Entstehung eines Spalts zwischen Fronthaube 1 und Streuscheibe 2' bzw. Karosserie. Das Abdeckelement 6 erstreckt sich im wesentlichen über die gesamte Breite der Fronthaube 1 (nicht dargestellt) und verdeckt in der Sicherheitsposition der Fronthaube 1 nahezu den gesamten Bereich zwischen Fronthaube 1 und Karosserie.

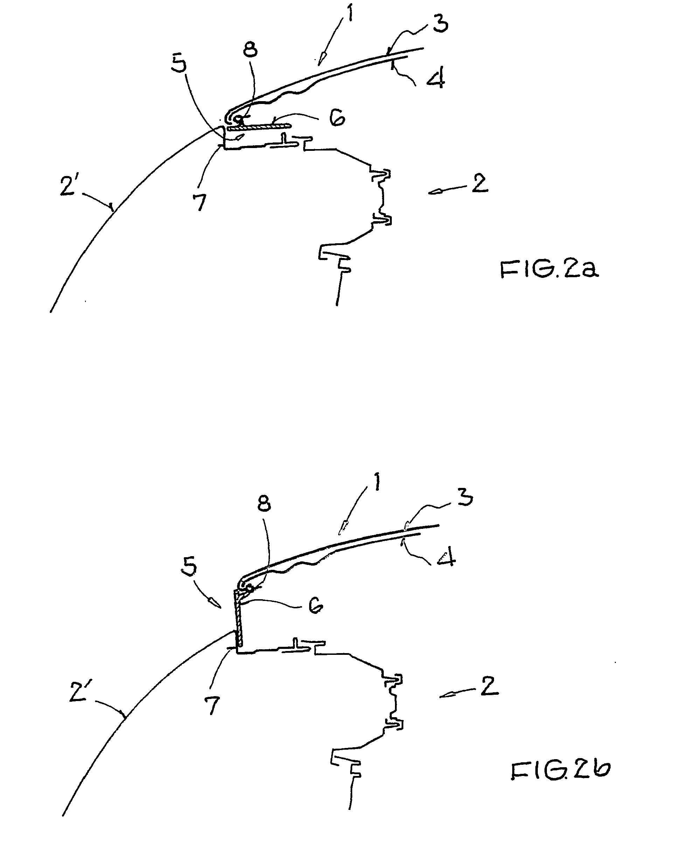

Aus Fig. 2a, b geht ein erfindungsgemäßes Ausführungsbeispiel einer Sicherheitsvorrichtung 5 hervor. Im Unterschied zu Fig. 1a, b ist die Sicherheitsvorrichtung 5 mehrteilig ausgebildet. Sie umfaßt ein Abdeckelement 6 und ein Scharnier 8. Das Scharnier 8 ist unterhalb der Fronthaube 1 an einem in Fahrtrichtung weisendes Ende der Fronthaube 1 befestigt. Das Abdeckelement 6 ist schwenkbar in dem Scharnier 8 gelagert und dreht sich um das Scharnier 8 in Pfeilrichtung A. In der in Fig. 1a dargestellten Ausgangsposition erstreckt sich das Abdeckelement 6 waagerecht und damit im wesentlichen parallel zur Fronthaube 1. In Fig. 2b ist die Fronthaube 1 in der Sicherheitsposition dargestellt. Das Abdeckelement 6 nimmt eine vertikale Position ein. Ein dem Scharnier 8 abgewandtes Ende des Abdeckelements 6 liegt in dieser Position an dem Absatz 7 des Scheinwerfermoduls 2 an und verdeckt somit den Bereich zwischen Fronthaube 1 und Scheinwerfermodul 2. Die Überführung von der horizontalen in die vertikale Position kann beispielsweise über eine Feder (nicht dargestellt) erfolgen, die eine Kraft auf das Abdeckelement 6 aufbringt. Dadurch wird das Abdeckelement 6 in Richtung Fronthaube 1 gedrückt und in dieser Position arretiert. Sobald die Fronthaube 1 bei einer Unfallsituation in die Sicherheitsposition überführt wird, wird gleichzeitig die Feder entspannt. Dadurch wird die Arretierung gelöst. Das Abdeckelement 6 schwenkt um das Scharnier 8 und nimmt eine vertikale Position ein. Es ist aber auch denkbar, die Positionsveränderung des Abdeckelements 6 über einen Elektromotor zu erreichen. Die Positionsänderung des Abdeckelements 6 kann beispielsweise über einen Sensor ausgelöst werden.

Im folgenden wird die Funktionsweise der Sicherheitsvorrichtung anhand der Fig. 2a, b erläutert.

Die in Fig. 2a dargestellte Schnittansicht zeigt die Fronthaube 1 in ihrer Ausgangsposition, also vor einer Unfallsituation. In diesem Fall ist das Abdeckelement 6 der Sicherheitsvorrichtung 5 parallel zur Fronthaube 1 ausgerichtet. Im Falle eines Unfalls wird die Fronthaube 1 in eine Sicherheitsposition angehoben. Dies ist in Fig. 2b dargestellt. Das Abdeckelement 6 wird gleichzeitig aus einer nicht weiter ausgeführten Arretierung gelöst. Nach dem Lösen wird das Abdeckelement 6 um das Scharnier 8 gemäß Pfeilrichtung A in eine vertikale Position verschwenkt bis es eine vertikale Position einnimmt. Der Bereich zwischen Fronthaube 1 und Karosserie ist vollständig verdeckt. Dadurch wird bei einer Kollision mit einem Fußgänger während der gesamten Unfallsituation ein Einklemmen, wie beispielsweise einer Hand oder eines Fingers des Fußgängers, verhindert. Bei einer Fehlauslösung oder wenn die Fronthaube 1 nach einem Unfall weitgehend unbeschädigt ist, kann die Fronthaube 1 in ihre Ausgangsposition zurückverlagert werden. Dabei wird das Abdeckelement 6 wieder parallel zur Fronthaube 1 ausgerichtet. Die Sicherheitsvorrichtung 5 ist reversibel.

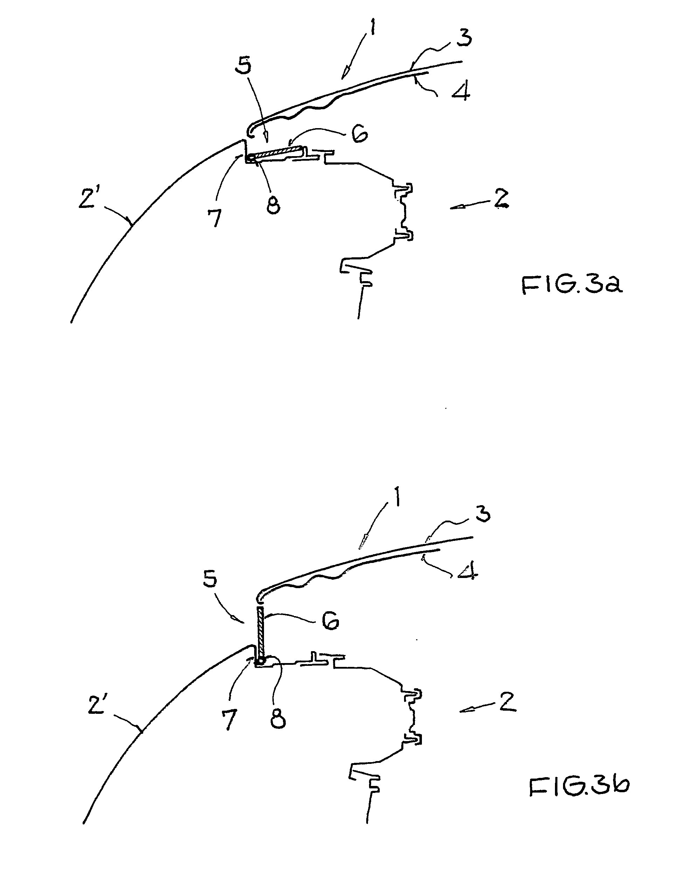

Fig. 3a, b unterscheiden sich von Fig. 2a, b dadurch, daß das Scharnier 8 der Sicherheitsvorrichtung 5 an der Karosserie befestigt ist. Das Scharnier 8 ist in dieser Ausführungsform in dem Absatz 7 der Streuscheibe 2' befestigt. Das Abdeckelement 6 schwenkt um das Scharnier 8 in Pfeilrichtung A bis das Abdeckelement 6 senkrecht zur Fronthaube 1 ausgerichtet ist. Das Abdeckelement 6 verdeckt dadurch den Bereich zwischen Fronthaube 1 und Scheinwerfermodul 2.

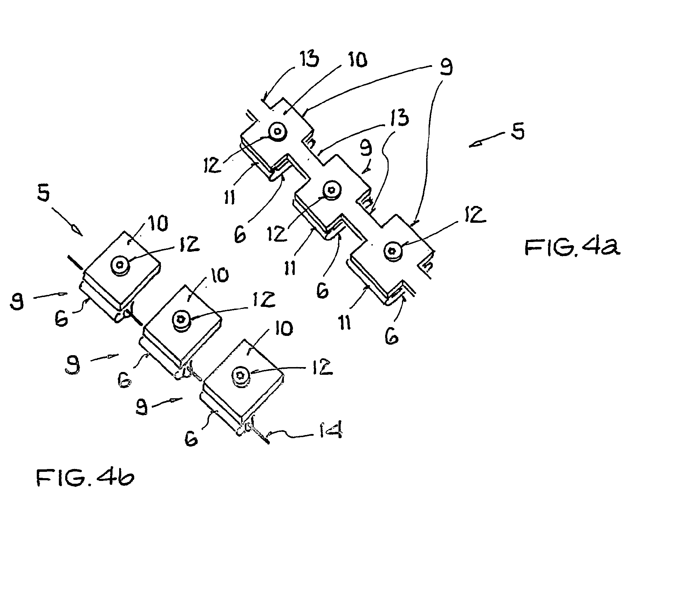

In Fig. 4a ist eine weitere Ausführungsform einer Sicherheitsvorrichtung 5 dargestellt. Die Sicherheitsvorrichtung 5 umfaßt mehrere nebeneinander angeordnete Segmente 9. Die Segmente 9 weisen jeweils ein Halteelement 10 und ein Abdeckelement 6 auf. Es ist ebenfalls möglich, die Segmente 9 ohne Halteelemente 10 herzustellen. Die Abdeckelemente 6 der Segmente 9 werden in diesem Fall direkt mit entsprechenden Befestigungsmöglichkeiten an der Fronthaube 1 oder an der Karosserie befestigt. Die Halteelemente 10 und die Abdeckelemente 6 sind jeweils über ein Scharnier 11 schwenkbar miteinander verbunden. Es ist auch denkbar, die Halteelemente 10 und die Abdeckelemente 6 der Segmente 9 über ein Filmscharnier schwenkbar zu verbinden. Die Halteelemente 10 sind im wesentlichen rechteckig ausgebildet und werden mittels eines Befestigungselements 12, wie beispielsweise einer Schraube, an der Unterseite der Fronthaube 1 oder der Karosserie befestigt. Die Haltelemente 10 sind jeweils über Stege 13 miteinander verbunden. Anstelle der Stege 13 ist auch eine Verbindung der einzelnen Segmente 9 in Form eines Drahts 14 denkbar, wie die Ausführungsform einer Sicherheitsvorrichtung 5 in Fig. 4b zeigt. Die Abdeckelemente 6 weisen ebenfalls eine im wesentlichen rechteckige Form auf.

Die Sicherheitsvorrichtung 5 kann nicht nur - wie in den Fig. 1 bis 3 gezeigt - zwischen Fronthaube 1 und Scheinwerfermodul 2 angeordnet werden. Beispielsweise ist es ebenfalls möglich, die Sicherheitsvorrichtung in den Bereichen zwischen Fronthaubenvorderkante und Kühlergrill bzw. Kühlergrill und Stoßfänger, zwischen seitlicher Fronthaubenkante und Kotflügel oder zwischen Fronthaubenhinterkante und Windschutzscheibe anzuordnen.

## Patentansprüche

1. Sicherheitsvorrichtung für ein Kraftfahrzeug,
die einer Fronthaube zugeordnet ist, welche in einer Unfallsituation aus ihrer geschlossenen Ausgangsposition in eine gehobene Sicherheitsposition verlagert wird,
wobei die Sicherheitsvorrichtung (5) ein Abdeckelement (6) umfaßt, welches in der Sicherheitsposition einen Bereich zwischen Fronthaube (1) und Karosserie verdeckt und dabei winklig zur Fronthaube (1) angeordnet ist,
**dadurch gekennzeichnet,**
**daß** das Abdeckelement (6) schwenkbar gelagert ist.

2. Sicherheitsvorrichtung nach Anspruch 1,
**dadurch gekennzeichnet,**
**daß** das Abdeckelement (6) an der Fronthaube (1) befestigt ist.

3. Sicherheitsvorrichtung nach Anspruch 1,
**dadurch gekennzeichnet,**
**daß** das Abdeckelement (6) an der Karosserie befestigt ist.

4. Sicherheitsvorrichtung nach einem der Ansprüche 1 bis 3,
**dadurch gekennzeichnet,**
**daß** die Sicherheitsvorrichtung (5) ein Halteelement (10) umfaßt.

5. Sicherheitsvorrichtung nach Anspruch 4,
**dadurch gekennzeichnet,**
**daß** das Halteelement (10) und das Abdeckelement (6) über ein Scharnier (8) miteinander verbunden sind.

6. Sicherheitsvorrichtung nach einem der Ansprüche 1 bis 5,
**dadurch gekennzeichnet,**
**daß** sich das Abdeckelement (6) in der Sicherheitsposition der Fronthaube (1) im wesentlichen senkrecht zur Fronthaube (1) erstreckt.

7. Sicherheitsvorrichtung nach einem der Ansprüche 1 bis 4,
**dadurch gekennzeichnet,**
**daß** sich das Abdeckelement (6) in der Ausgangsposition der Fronthaube (1) im wesentlichen parallel zur Fronthaube (1) erstreckt.

8. Sicherheitsvorrichtung nach einem der Ansprüche 1 bis 7,
**dadurch gekennzeichnet,**
**daß** das Abdeckelement (6) vorgespannt ist.

9. Sicherheitsvorrichtung nach einem der Ansprüche 1 bis 8,
**dadurch gekennzeichnet,**
**daß** ein Sensor vorgesehen ist, der eine Unfallsituation detektiert.

10. Sicherheitsvorrichtung nach einem der Ansprüche 1 bis 9,
**dadurch gekennzeichnet,**
**daß** die Sicherheitsvorrichtung (5) mehrere nebeneinander angeordnete Segmente (9) aufweist.

## Claims

1. Safety device for a motor vehicle, which is assigned to a front lid which is moved from its initial closed position to a raised safety position in an accident situation, the safety device (5) comprising a cover element (6) which, in the safety position, covers a region between the front lid (1) and the bodywork and is arranged at an angle with respect to the front lid (1), **characterized in that** the cover element (6) is mounted pivotably.

2. Safety device according to Claim 1, **characterized in that** the cover element (6) is fastened to the front lid (1).

3. Safety device according to Claim 1, **characterized in that** the cover element (6) is fastened to the bodywork.

4. Safety device according to one of Claims 1 to 3, **characterized in that** the safety device (5) comprises a holding element (10).

5. Safety device according to Claim 4, **characterized in that** the holding element (10) and the cover element (6) are connected to each other via a hinge (8).

6. Safety device according to one of Claims 1 to 5, **characterized in that**, in the safety position of the front lid (1), the cover element (6) extends essentially perpendicular to the front lid (1).

7. Safety device according to one of Claims 1 to 4, **characterized in that**, in the initial position of the front lid (1), the cover element (6) extends essentially parallel to the front lid (1).

8. Safety device according to one of Claims 1 to 7, **characterized in that** the cover element (6) is prestressed.

9. Safety device according to one of Claims 1 to 8, **characterized in that** a sensor is provided which detects an accident situation.

10. Safety device according to one of Claims 1 to 9, **characterized in that** the safety device (5) has a plurality of segments (9) arranged next to one another.

## Revendications

1. Dispositif de sécurité pour un véhicule, auquel est adjoint un capot avant, lequel est déplacé, dans une situation d'accident, de sa position de départ fermée dans une position de sécurité soulevée, le dispositif de sécurité (5) comprenant un élément de recouvrement (6), lequel couvre, dans la position de sécurité, une zone entre le capot avant (1) et la carrosserie, et est ainsi agencé de manière angulaire par rapport au capot avant (1),
**caractérisé en ce**
**que** l'élément de recouvrement (6) est installé de manière pivotante.

2. Dispositif de sécurité selon la revendication 1,
**caractérisé en ce**
**que** l'élément de recouvrement (6) est fixé sur le capot avant (1).

3. Dispositif de sécurité selon la revendication 1,
**caractérisé en ce**
**que** l'élément de recouvrement (6) est fixé sur la carrosserie.

4. Dispositif de sécurité selon l'une quelconque des revendications 1 à 3,
**caractérisé en ce**
**que** le dispositif de sécurité (5) comprend un élément de maintien (10).

5. Dispositif de sécurité selon la revendication 4,
**caractérisé en ce**
**que** l'élément de maintien (10) et l'élément de recouvrement (6) sont reliés l'un à l'autre par l'intermédiaire d'une charnière (8).

6. Dispositif de sécurité selon l'une quelconque des revendications 1 à 5,
**caractérisé en ce**
**que** l'élément de recouvrement (6) s'étend, dans la position de sécurité du capot avant (1), sensiblement verticalement par rapport au capot avant (1).

7. Dispositif de sécurité selon l'une quelconque des revendications 1 à 4,
**caractérisé en ce**
**que** l'élément de recouvrement (6) s'étend, dans la position de départ du capot avant (1), sensiblement parallèlement par rapport au capot avant (1).

8. Dispositif de sécurité selon l'une quelconque des revendications 1 à 7,
**caractérisé en ce**
**que** l'élément de recouvrement (6) est monté en précontrainte.

9. Dispositif de sécurité selon l'une quelconque des revendications 1 à 8,
**caractérisé en ce**
**qu'**un capteur est prévu, lequel détecte une situation d'accident.

10. Dispositif de sécurité selon l'une quelconque des revendications 1 à 9,
**caractérisé en ce**
**que** le dispositif de sécurité (5) présente plusieurs segments (9) disposés les uns à côté des autres.
